(19) **Europäisches Patentamt / European Patent Office / Office européen des brevets**

(11) **EP 4 629 478 A1**

(12) **EUROPEAN PATENT APPLICATION**

(43) Date of publication:
08.10.2025 Bulletin 2025/41

(21) Application number: 24382349.9

(22) Date of filing: 05.04.2024

(51) International Patent Classification (IPC):
*H02J 50/00* (2016.01)    *H02J 50/23* (2016.01)
*H02J 50/40* (2016.01)    *H02J 50/70* (2016.01)

(52) Cooperative Patent Classification (CPC):
**H02J 50/23; H02J 50/005; H02J 50/402; H02J 50/70;** H02J 2310/48

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universitat Autònoma de Barcelona**
**08193 Bellaterra (Cerdanyola del Vallès) (ES)**

(72) Inventors:
• **BONACHE ALBACETE, Jorge**
  **08193 Bellaterra, Cerdanyola del Vallès (ES)**
• **ZAMORA GONZÁLEZ, Gerard**
  **08193 Bellaterra, Cerdanyola del Vallès (ES)**
• **JAQUE JIMÉNEZ, Alvaro Patricio**
  **08193 Bellaterra, Cerdanyola del Vallès (ES)**

(74) Representative: **Ponti & Partners, S.L.P**
**Edifici PRISMA**
**Av. Diagonal núm. 611-613, Planta 2**
**08028 Barcelona (ES)**

(54) **A SYSTEM FOR NEAR-FIELD WIRELESS POWER TRANSFER**

(57) The present invention relates to a system for near-field wireless power transfer, comprising an emitter (1) for generating electromagnetic energy, from at least one input electrical power signal injected therein, and propagating the electromagnetic energy therethrough, to be wirelessly captured in the near field by a receiver (2), wherein the emitter (1) comprises an electromagnetic field confinement device configured to operate in the surface wave mode for generating and propagating the electromagnetic energy in the form of surface waves.

**Fig. 1**

EP 4 629 478 A1

**Description**

Field of the Invention

The present invention generally relates to a system for near-field wireless power transfer, and in particular to a system based on surface waves, which by means of an electromagnetic field confinement allows energy transfer over long distances.

Background of the Invention

There are different systems for near-field wireless power transfer known in the prior art, particularly for wireless providing electromagnetic energy transfer between an emitter and a receiver, wherein that electromagnetic energy has been generated by the emitter, from an input electrical power signal injected therein, and has been propagated through the emitter.

However, those prior art systems have several drawbacks and are thus improvable.

For some of those prior art systems, one of those drawbacks is the attenuation suffered by the propagating electromagnetic energy, due, among others, to radiation and undesired leaks, which makes those systems only valid for energy transfer within a limited distance between the point of injection, in the emitter, and the point of interaction with the receiver, i.e. for limited travelling distances.

For other of those prior art systems, specifically for low-frequency systems, the main drawback is the problem of alignment between emitter and receiver, which forces them to be positioned in a very specific place and which forces them to work at a very short coupling distance.

It is therefore necessary to offer an alternative to the state of the art, which covers the gaps mentioned above, particularly by providing a system which does not have the above mentioned drawbacks and limitations, and which is really made to work at relatively large coupling distances (even when operating at low-frequencies) and to provide a near-field wireless power transfer over long travelling distances, for providing a level of coupling independent, or almost independent, of the distance between the signal injection point in the emitter and the point of interaction with the receiver.

Description of the Invention

To that end, the present invention relates to a system for near-field wireless power transfer, comprising an emitter for generating electromagnetic energy, from at least one input electrical power signal injected therein, and propagating said electromagnetic energy therethrough, to be wirelessly captured in the near field by a receiver

In contrast to the systems known in the prior art, in the system of the present invention the emitter comprises an electromagnetic field confinement device configured to operate in the surface wave mode for generating and propagating the electromagnetic energy in the form of surface waves.

For an embodiment, the system further comprises said receiver configured and arranged to wirelessly capture said electromagnetic energy in the near field and to convert the same into an output electrical power signal (such as a direct current electrical signal to be stored or consumed at that same moment).

For an embodiment, the electromagnetic field confinement device comprises a waveguide.

For some embodiments, the waveguide is a TEM waveguide, formed for example by plano-parallel plates or by transmission lines.

According to an embodiment, said waveguide has any possible cross-section that works for the present invention, such as a rectangular or circular cross-section, and is filled with a dielectric material.

For an implementation of that embodiment, the waveguide is a substrate integrated waveguide (SIW) defining a structure having a length running along a y direction and a width across an x direction.

According to a variant of that implementation, at least one slot is defined in a metallic layer of the SIW, wherein said at least one slot is configured and arranged so that first and second degenerate modes appear in the substrate integrated waveguide, said first degenerate mode having a magnetic wall symmetry with respect to a symmetry plane of said structure, and said second degenerate mode having an electric wall symmetry with respect to said symmetry plane and providing a net contribution of the electric field in said x direction.

Preferably, the waveguide (including the SIW) is made of a non-metamaterial and, also preferably, according to a non-periodic arrangement.

However, for other embodiments, the waveguide is made of a metamaterial.

Ideally, the emitter transports the electromagnetic energy through the electromagnetic field confinement device without any radiation or decay (beyond that produced by the losses of the device itself) until it reaches the receiver, which interacts with the near field generated by the emitter so that a wireless power transfer occurs.

As described in [1], by adjusting the wave number $\beta$ of the emitting medium, a surface wave can be generated that reduces its amplitude in the direction transverse to the direction of propagation. The parameter that determines the attenuation level (and therefore the confinement level) is governed by the following expression:

$$\alpha_t = \sqrt{\beta^2 - k_0^2} \tag{1}$$

Where $\beta$ corresponds to the wave number of the signal that propagates in the field confinement device and $k_0$ corresponds to the wave number of that same signal in a vacuum. For signal confinement to occur inside the emitter, the condition $|\beta| > |k_0|$ must be met (which implies that the phase speed of the signal inside the field confinement device is lower than the phase velocity in a vacuum), since otherwise the emitter will radiate. As described in [1] and considering a signal propagating in the y direction, the amplitude attenuation with distance can be calculated with decreasing functions whose attenuation constant corresponds to $\alpha_t$. For field distributions invariant in the x direction, the attenuation in the z direction is obtained with exponential functions of the type $e^{-\alpha_t z}$, while for field distributions with cylindrical symmetry the attenuation can be calculated with Hankel functions of the first species $H_1^{(1)}(j\alpha_t r)$ , where $r$ corresponds to the radial distance measured with respect to the emitting device. For sufficiently large distances these functions converge to the same exponential function.

As mentioned above, for the confinement of the electromagnetic field to occur, the condition $|\beta| > |k_0|$ must be met. For a rectilinear hollow waveguide this condition is not met at any frequency, but for the embodiment for which the waveguide is a waveguide filled with a dielectric material, such as a SIW, the fact that the SIW structure is filled with a dielectric material slows down the propagation speed so that the previous condition can be met. The following expression shows the value of the wave number for a waveguide filled with a dielectric for the first propagation mode ($TE_{10}$) and is valid for any rectangular waveguide filled with a dielectric material:

$$\beta = \pi \sqrt{\varepsilon_r \mu \left(\frac{2f}{c}\right)^2 - \frac{1}{a^2}} \tag{2}$$

where $a$ is the waveguide width, $f$ is the frequency, $\varepsilon_r$ is the relative permittivity of the SIW substrate, $c$ the speed of light in vacuum, and $\mu$ the magnetic permeability (most of dielectric materials don't have a magnetic response, so that for them $\mu = \mu_0$, where $\mu_0$ refers to the magnetic permeability of free space).

It can be seen how by adjusting the dimension corresponding to the width of the SIW waveguide (parameter $a$) once can control the value of $\beta$ and therefore adjust the desired confinement value using expression (1). By combining equations (1) and (2) one can obtain the expression for $a$ to adjust the necessary level of confinement:

$$a = \frac{\pi}{\sqrt{(\varepsilon_r - 1)(2\pi f/c)^2 - \alpha_t^2}} \tag{3}$$

In this case, the second degenerate mode that appears when the slot is introduced into the SIW guide has been used (that second degenerate mode cannot exist without the presence of that slot), since said mode presents an electrical wall symmetry with respect to the symmetry plane of the waveguide [3].

Therefore, for an embodiment (referring not only to the SIW, but for any waveguide filled with a dielectric material), the waveguide is configured to operate in the surface wave mode to generate the surface waves with a controlled decay factor in the broadside direction on both top and bottom surfaces of the waveguide, said decay factor having been controlled by providing the waveguide with a width that makes $|\beta| > |k_0|$, wherein $\beta$ is the wavenumber of a surface wave signal propagating through the waveguide, and $k_0$ refers to the wavenumber in vacuum for that signal.

For another embodiment (alternative or complementary to the above mentioned embodiment), that decay factor has been controlled in some specific space harmonic by providing two non-resonant slots placed in specific bends of the waveguide on both the top and bottom surfaces of the waveguide.

For the above mentioned embodiments for which the waveguide is a TEM waveguide, $\beta$ has been controlled by adjusting the dielectric value of the TEM waveguide so that $|\beta| > |k_0|$.

For an embodiment, the receiver comprises a device configured to interact with the emitter to constitute a directional coupler.

For an implementation of that embodiment, said device is an antenna or a resonator configured to interact with the field generated by the emitter and to capture the electromagnetic energy contained therein, either by coupling with the electric field, with the magnetic field or with both.

For another implementation of that embodiment, said device is an electromagnetic field confinement device.

According to a variant of that implementation, the electromagnetic field confinement device of the receiver also comprises a waveguide defined as the waveguide of the emitter, at least with respect to the type of waveguide and/or the inclusion of at least one slot.

The electromagnetic field confinement device of the emitter (and also of the receiver when it comprises such a device) can be implemented by any means in which the speed of signal propagation can be controlled in order to generate a surface wave. For higher power levels to be transferred, it may be convenient to use confinement devices based on hollow waveguides, since they allow greater power management. An alternative may be the device presented in [4] operating as a slow wave (in [4] the device works in fast wave mode and therefore radiates; in the present invention it is proposed to use it in confined mode).

Therefore, for an embodiment, the waveguide is a hollow waveguide with a periodic serpentine-shaped arrangement including a number of meandered unit cells, each meandered unit cell having a length predetermined to provide a phase shift between the input and output of each unit cell and a slot defined in a top or bottom face, to allow the formation and propagation of surface waves. An implementation of this embodiment will be further detailed in a subsequent section with reference to the drawings.

For an embodiment, the system of the present invention comprising at least one further receiver(or various further receivers) defined as the above described receiver, each of the respective constituted directional couplers configured to:

- wirelessly capture only part of the electromagnetic energy in the near field coming from the emitter, so that no further input electrical signal injection is needed, or
- wirelessly capture all the electromagnetic energy in the near field coming from the emitter, so that a further input electrical signal injection is needed for the further receiver being able to capture corresponding further electromagnetic energy in the near field generated by the emitter from said further input electrical signal injection.

The coupling factor between the emitter and each receiver is controlled, for an embodiment, both with the distance between them and with the overlapping area that exists between both.

Different uses and application are foreseen for the present invention, including:

- High power transfer for charging electric vehicles on the move.
- Charging of electronic devices (mobile phones, tablets, laptops, etc.)
- Charging of devices implanted in the body, such as pacemakers and other implanted devices.

An independent aspect concerns to a wireless communication system comprising an emitter and a receiver (or various receivers) respectively defined as the emitter and receiver of the system of the present invention, for any of the embodiments described in the present document.

For some embodiments, the electromagnetic field confinement device(s) is/are in a surface arrangement.

For other embodiments, the electromagnetic field confinement device(s) is/are in a lineal arrangement (for example, for electrically charging electronic devices, such as the battery of smartphones, tablets, etc.).

For an embodiment, the system of the present invention constitutes a charging station for electrically charge moving vehicles incorporating the receiver under their bodies electrically connected to a battery, the system comprising an elongated member including the electromagnetic field confinement device of the emitter extending longitudinally there along, to wireless power transfer to the receiver to charge the vehicle's battery when the respective vehicle circulates longitudinally over the elongated member.

A variation of that embodiment, but for electrically charge stationary vehicles is also embraced by the present invention.

Brief Description of the Drawings

The previous and other advantages and features will be better understood from the following detailed description of embodiments, with reference to the attached drawings, which must be considered in an illustrative and non-limiting manner, in which:

Figure 1 schematically shows a possible implementation of the system of the invention, for charging electric vehicles. (1) emitter with the electromagnetic field confinement device, (2) receiver, (3) signal injection point and (4) shaded representation of the confined electromagnetic field intensity generated by (1).

Figure 2 are two schematic partial cross-sections of the electromagnetic field confinement device of (at least) the emitter of the system of the present invention, for an embodiment, showing the two degenerate modes appearing when making a slot in the SIW structure (partially shown) of. (a) Mode with magnetic wall symmetry with respect to the symmetry plane of the structure; (b) mode with electric wall symmetry with respect to the symmetry plane of the structure.

Figure 3. Directional coupler formed by two electromagnetic field confinement structures in SIW configuration, one comprised by the emitter and the other by the receiver of the system of the present invention, for an embodiment for which the one of the emitter has a longitudinal slot defined in a top face.

Figure 4 shows simulation results of the electric field levels at the heights corresponding to the (a) emitter and (b) receiver of the system of the present invention, for an embodiment.

Figure 5 is a schematic representation of the electromagnetic field confinement device of at least the emitter of the system of the present invention, for an embodiment for which it is implemented with a hollow waveguide structure.

Figure 6 is a schematic representation of the electromagnetic field confinement device of at least the emitter of the system of the present invention, for an embodiment similar to that of Figure 5, but also including slots in the bottom segments of the unit cells.

Figure 7 show data calculated for a design of the device of Figure 6. (a) Dispersion diagram for the n-1 space harmonics on the aperture. (b) Theoretical attenuation constant in y-axis. The radiation region is highlighted in gray.

Figure 8 shows: (a) Unit cell cross section layout of the serpentine structure of the device of Figure 6. (b) Matching network Unit cell cross section layout for the device of Figure 6. Metallization is highlighted in light gray and the absence of metallization in dark gray. Dimensions are: $a = 60$ mm, $b = 3.1$ mm, $d = 19.42$ mm, $h = 20.2$ mm, $l_1 = 11$ mm, $l_2 = 10$, $s_1 = 2.01$ mm, $s_2 = 1$ mm, $s_3 = 20.35$ mm, $g = 2$ mm, $t = 0.1$ mm, $h_2 = 30$ mm, $h_3 = 10.5$ mm, $h_p = 15$ mm, $l_f = 125$ mm, $l_{f2} = 35$ mm, $l_{f3} = 40$ mm, $l_p = 15$ mm.

Figure 9 shows data also referring to the device of Figure 6. (a) Phase of the transmission coefficient under perfect matching conditions, with the black solid line representing 2 slots per UC (Unit Cell), the black dotted line for 1 slot per UC, and the black dashed line for configurations without slots. (b) Theoretical electromagnetic field attenuation, where the black line indicates 2 slots per UC, the black dotted line signifies 1 slot per UC, the black dashed line for scenarios without slots, and the gray line corresponds to calculations using Equation (5).

Figure 10 is a diagram showing the isolines of the field amplitude on the surface of the electromagnetic field confinement device (3.9 GHz) of Figure 6. Simulation in CST Microwave Studio with open boundary conditions.

Figure 11 is an image of a fabricated prototype of the device of Figure 6. (a) Cross-sectional zoom view of the serpentine in the xy-plane according to Fig. 1. (b) Cross-sectional view of the total serpentine length in the xy-plane. (c) Full view of the device in the xz-plane.

Figure 12 is an image showing a cross-sectional view of the matching network in the xy-plane, for the device of Figure 6.

Figure 13 shows a comparison between the measured and the simulated S-parameters, for the device of Figure 6. (a) S-parameters for the bidirectional electromagnetic confinement device, with simulation results shown as dots and measurement results depicted by a solid line. (b) S-parameters for the unidirectional electromagnetic confinement device, where simulation results are represented as dots and measurement results are illustrated by a solid line.

Figure 14 show measured data obtained with the device of Figure 6. (a) Measured electric field at 0,1 cm from the surface of the electromagnetic field confinement device, (b) Measured normalized electric field decay (symbols) and theoretical normalized electric field decay (solid line) in broadside direction.

Figure 15 presents measured and theoretical data for the device of Figure 6. (a) Measured (symbols) and theoretical (solid line) electric field in y-axis on top surface. (b) Measured (symbols) and theoretical (solid line) electric field in y-axis on bottom surface.

Figure 16 show measured and theoretical data for the device of Figure 6. (a) Attenuation of the bidirectional device, showing measured attenuation with black squares for the top surface and gray dots for the bottom surface, alongside the theoretical attenuation represented by a black line. (b) Attenuation of the unidirectional device, with measured attenuation indicated by grey squares and theoretical attenuation depicted by a black line.

Figure 17 shows the measured radiation pattern in E plane at different frequencies (xy-plane according to figure 8), for the device of Figure 6.

<u>Detailed Description of Several Embodiments</u>

As stated in a previous section, at least the emitter of the system of the present invention comprises an electromagnetic field confinement device, which allows, by controlling confinement therein, controllable coupling distances to be achieved, allowing energy transfer over greater distances than can be obtained using conventional means to transport energy. It should be noted that the level of coupling achieved is independent of the distance between the signal injection point in the emitter and the point of interaction with the receiver, since the electromagnetic energy travels between these two points without being radiated. Unlike what happens with known power transfer techniques, this technique allows greater ease of alignment between the sender and the receiver, since, once the desired coupling is set, the energy exchange can occur at any point. of the geometry of the emitter.

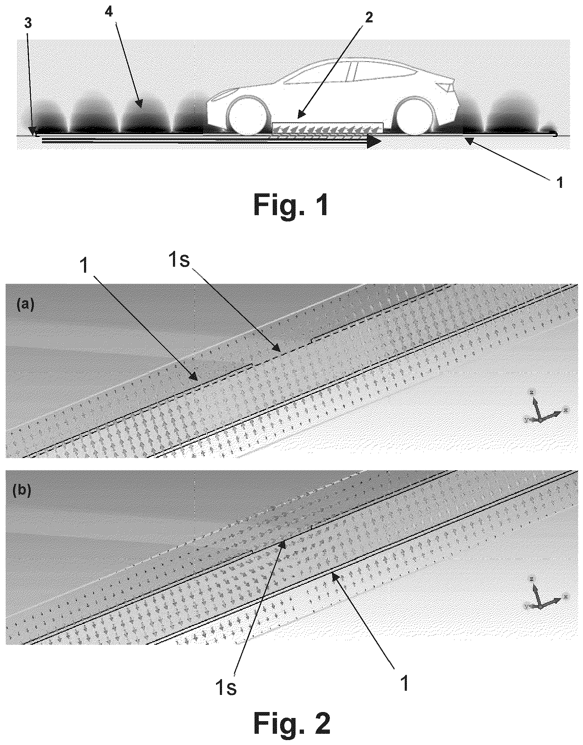

This feature opens up the possibility of charging devices even while moving, such as electric vehicles in circulation, as is the case of the implementation of the system shown in Figure 1.

Specifically, Figure 1 shows an operating diagram of the system of the invention for that implementation, where 1 represents the electromagnetic field confinement device that is comprised by or acts as an emitter, 2 corresponds to the receiver, which in this case would be installed in the lower part of an electric vehicle, 3 corresponds to the signal injection point and 4 corresponds to a shaded representation of the intensity of the confined electromagnetic field generated by 1. The direction of energy flow is represented marked with a double arrow. A segment of the emitter has been represented, but it can be much longer, since, as mentioned above, the signal travels through it without attenuation until it reaches the receiving device. With a single injection of power in injection point 1, one or more vehicles can be powered, since if the coupling is selected to be 100%, all the power will disappear from the transmitter once it reaches the first vehicle. If the coupling is less, some of the power will continue to travel through the field confinement device, being available for use by other vehicles. Energy can be injected into the field confinement device every certain distance using signal combiners that maintain an adequate level of available power to be able to supply the necessary number of vehicles.

The receiver 2 can be formed by or comprise, among other possible implementations, a second electromagnetic field confinement device that when interacting with the emitter 1 constitutes a directional coupler (which is designed to have the desired level of coupling).

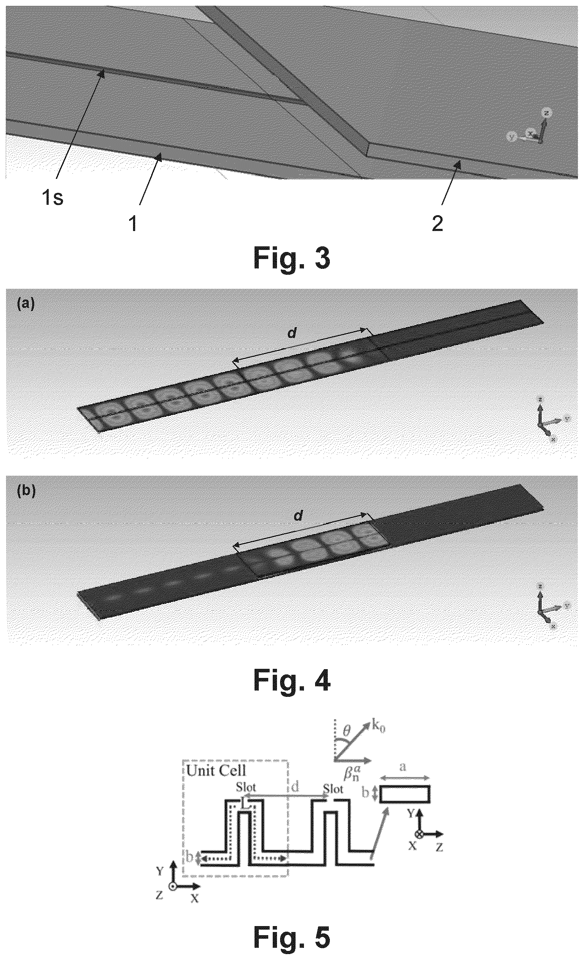

For a variant of the implementation shown in Figure 1, both the emitter 1 and the receiver 2 are implemented using an SIW waveguide [2] in which a slot has been made in one face of the metal, as shown, for example, in Figures 2 and 3, for the slot 1s made on the top face of the SIW of the emitter.

As stated in a previous section, in this case, the second degenerate mode has been used that appears when the slot is introduced into the SIW guide, and that cannot exist without the presence of it, since said mode presents an electrical wall symmetry with respect to the symmetry plane of the waveguide [3].

Figure 2 shows the comparison between the two degenerate modes, the first of which (a) shows a symmetry of the magnetic wall with respect to the symmetry plane of the structure, as occurs in the $TE_{10}$ mode of a conventional SIW guide, while in the second mode (b) the electric field distribution shows a net contribution of the electric field in the x direction, which is incompatible with the boundary conditions resulting from filling the slot 1s with a conductor. Both modes have similar propagation characteristics and cutoff frequency, so as a starting point the structure can be designed considering the $TE_{10}$ mode.

Figure 3 shows a detail of the structure where the configuration of the two coupled field confinement devices that form the directional coupler can be seen. The coupling is controlled both with the distance between devices and with the overlap area (see parameter d in Figure 4) that exists between them.

Figure 4 shows the result of the electromagnetic simulation of this structure designed to transfer 100% of the power between the emitter 1 and the receiver 2. Figure 4(a) shows the amplitude of the electric field in a value of the z coordinate corresponding to the waveguide of the emitter, while Figure 4(b) shows the electric field in the receiver. It can be seen how throughout the overlapping area of both structures, indicated with parameter d, the amplitude of the signal transported by the emitter progressively decreases in the emitter (a) while the signal level increases in the receiver (b).

As described above, the electromagnetic field confinement device can be implemented by any means in which the speed of signal propagation can be controlled in order to generate a surface wave. For higher power levels to be transferred, it may be convenient to use confinement devices based on hollow waveguides, since they allow greater power management. As described in a previous section, an alternative may be the device presented in [4] operating as a slow wave (in [4] the device works in fast wave mode and therefore radiates, in this invention it is proposed to use it in confined mode). A simplified scheme of the operation of said device can be found in Figure 5.

The use of a periodic hollow waveguide with a unit cell meandered in the form of a serpentine allows introducing a phase shift (controlled by the length of the meander) between the input and the exit of the cell. On the upper and lower face of the structure a surface appears that behaves as an effective medium and by making a slot in one of these faces one can allow the field of the guide to go outside so that the surface wave necessary for operation of the device can be formed.

By adjusting the geometry of the unit cell, a value of the effective wave number $\beta_n{}^a$ can be imposed, which is governed by expression (4), where n corresponds to the spatial harmonic considered, with the harmonic n=-1 being that of greater relevance (the rest offer a greater degree of confinement, so their influence disappears quickly when moving away from the waveguide), $\beta_g$ corresponds to the wave number of the mode that propagates in the waveguide, L corresponds to the length traveled by the signal inside the waveguide and d is the distance between slots made in the waveguide [5]:

$$\beta_n^a = \frac{\left(\beta_g L + 2\pi n\right)}{d} \qquad (4)$$

In Figure 5, a rectangular waveguide is shown. However, for other embodiments, the waveguides of both the emitter and the receiver can be formed by other geometries, such as by means of cylindrical waveguides, etc. which can be in a meandered configuration if they are hollow or can also be in a rectilinear configuration if they are filled with dielectric.

In the following some implementations of the electromagnetic field confinement device of the emitter (and also, optionally of the receiver) of the system of the present invention will be described in detail, together with simulations and experimental results obtained with them. Particularly, implementations of the above mentioned embodiment for which the electromagnetic field confinement device is based on a slotted serpentine waveguide will be described below.

The design of that device, along with the matching network and the underlying equations and methodology, are detailed below. Specifically, for an implementation, the presented periodic structure comprises 30 unit-cells (UCs), each with two non-resonant slots, strategically positioned in specific bends to control the electromagnetic field decay on both the top and bottom surfaces. Additionally, a unidirectional version based on the same unit cell is analyzed.

The device operates within the frequency band of 3.6 to 4.2 GHz.

The details provided below include measurements of the electric field distribution in the broadside direction across various frequencies, comparison with theoretical predictions, and extraction of the decay factor from measured samples for further comparison with theoretical analysis, conducted by eth present inventors.

Moreover, measured and simulated S-parameters, as well as the radiation pattern of the device at different frequencies, are presented. The fabricated prototype demonstrates a strong correlation between theoretical predictions and experimental results, substantiating the accuracy and reliability of the proposed approach.

In addition to the applications of the present invention, i.e. for wireless power transfer, the described device may also find applications in short-range communications.

The electromagnetic field confinement device has been specifically designed for the C-band. This device utilizes a serpentine rectangular waveguide loaded with transverse rectangular slots, following the design methodology proposed in [1].

The geometrical arrangement operates in the surface wave mode to generate an surface wave with a controllable decay factor in the broadside direction on both top and bottom surfaces.

Additionally, a matching network is introduced based on taper transition and step impedance, as well as a unidirectional version of the device.

Theoretical analyses are compared with both simulation and experimental results, showcasing the S-parameters and the electric field distribution in the broadside direction. The proposed prototype has been successfully tested, demonstrating a good agreement between theoretical predictions and experimental results.

*Proposed structure and principle of operation:*

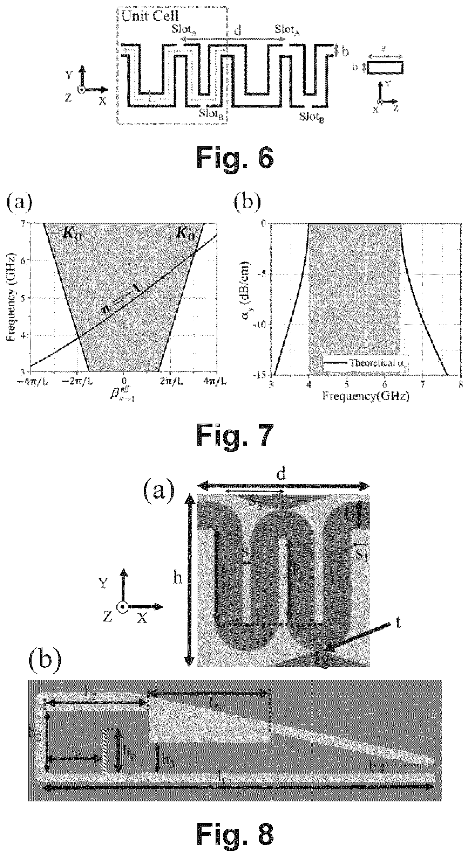

The proposed travelling-wave structure is depicted in Fig. 6 and consists of an air-filled serpentine rectangular waveguide loaded with two transverse rectangular slots placed on the top wide wall (Slot$_A$) and bottom wide wall (Slot$_B$), where $W_s$ and $L_s$ are the slot width and the length respectively, $d$ is the distance between two consecutive identical slots in the same surface, $L$ is the meandered waveguide length and $a$ is the width of the waveguide. Although the proposed structure is based on a hollow rectangular waveguide, which supports fast waves only in its straight configuration, the periodic nature of the serpentine arrangement allows for the presence of spatial harmonics. These harmonics can behave as fast waves (radiative) or slow waves (surface waves) [1], [4], [6]. Radiative waves propagate along the guiding structure (x-axis according to Fig.6) and gradually leak out an amount of energy (i.e., Leaky Wave Antennas [4], [6]-[12]. Meanwhile, surface waves propagate along the direction of the guiding structure and decay vertically (along the y-axis).

As explained in a previous section, the level of confinement achieved by this device is determined by the relationship between the phase constant of the signal traveling inside the structure ($\beta$) and the wave vector of the same signal in the surrounding medium ($k_0$). Ensuring the medium's effective signal confinement requires the fulfillment of $|\beta| > |k_0|$ (indicating the signal's phase velocity within the confinement device is lower than in vacuum) [1]. Nevertheless, due to the periodicity of the proposed structure, the phase constant that needs to be considered is not that of the rectangular waveguide's TE$_{10}$ mode ($\beta_g$), but rather that associated with the specific space harmonic under consideration [6]. However, typically only the least confined space harmonic needs to be considered, as the others tend to rapidly diminish a short distance away from the surface [1].

Assuming an effective wave in the device surface propagates in x-direction, the attenuation constant in y-direction is given by [1]:

$$\alpha_y = \sqrt{\left(\beta_n^{eff}\right)^2 - k_0^2} \tag{5}$$

where $\beta_n^{eff}$ is the effective phase constant for a specific n-space harmonic. Attenuation along the y-direction is achieved via exponential functions like $e^{-\alpha_y y}$ for z-direction invariant field distributions, and through first-kind Hankel functions

$$H_1^{(1)}(j\alpha_t r)$$

for cylindrically symmetrical field distributions. Here, $r$ represents the radial distance measured from the confinement device [1]. The effective phase constant of the $n$-space harmonic in a serpentine arrangement can be expressed as follow [6], [4], [11]:

$$\beta_n^{eff} = \frac{(-\phi_{21}+2\pi n)}{d} \qquad (6)$$

where $\phi_{21}$ corresponds to the unwrapped phase shift within a unit cell, and n stands for the space harmonic index. Combining equations (1) and (2), the attenuation constant in the $y$-direction can be computed using the following expression:

$$\alpha_y = \sqrt{\left(\frac{(-\phi_{21}+2\pi n)}{d}\right)^2 - k_0{}^2} \qquad (7)$$

$\phi_{21}$ can be obtained through electromagnetic simulation, as it accounts not only for the electric length of the $TE_{10}$ mode in the waveguide but also for the phase shift introduced by loading the slots [4]. Nevertheless, by neglecting the effect of the phase shift introduced by the loading slots, the term $\phi_{21}$ can be simplified to $\phi_{21} = -\beta_g L$, where $L$ is the path length traveled by the $TE_{10}$ mode in the unit cell. This approximation allows to estimate the initial geometry of the device, which can be optimized using an electromagnetic simulator. As an example, Figure 7(a) presents the dispersion diagram and the theoretical decay calculated for a device with dimensions a = 60 mm, L = 71.83 mm , d = 19.42 mm, considering n = -1 (corresponding to the least confined space harmonic). The gray-colored area in the diagram represents the radiation zone. The results depicted in Figures 7(a) and 7(b) were obtained neglecting the phase shift introduced by the loading slots. As illustrated in Figure 7(b), there are two regions indicating that the device operates in the surface wave mode. Within the radiation region, $\alpha_y$ becomes imaginary, indicating that confinement is not possible.

*Design and simulated results:*

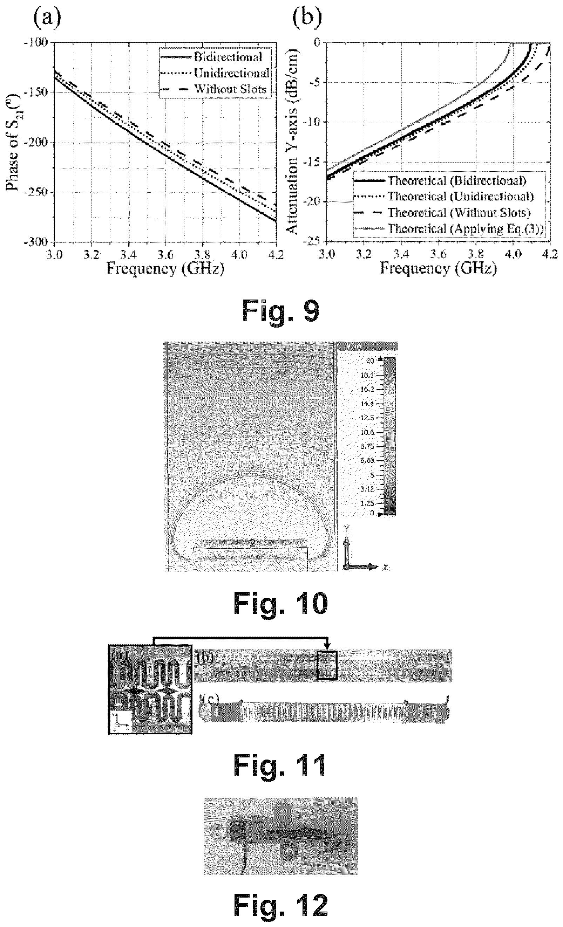

The unit cell of the serpentine structure is depicted in Figure 8(a), whereas the matching network, used as a transition between the feeding coaxial cable and the waveguide, is depicted in Figure 8(b). The dimensions are detailed in the figure caption. In order to increase the maximum field in the surface, the slot depth $t$ was reduced by using a ramp between the serpentine and the surface as the manufacturer's specifications required a minimum wall width of 2 mm. Given the non-standard nature of the designed serpentine waveguide, a matching network was implemented to facilitate signal excitation and ensure smooth transfer from $h_2$ to $b$. The matching network was designed using electromagnetic simulation in *CST Microwave Studio* [see Fig. 8(b)] The dimensions of the rectangular slots ($w_s$ = 20 mm and $l_s$ = 0.7 mm) were chosen small enough to be non-resonant ($w_s < \lambda_g/2$) [1]. Figure 9(a) illustrates the phase of the transmission coefficient for a unit cell under perfect matching conditions (i.e., using waveguide ports in CST Microwave Studio). In this figure, the unit cell loaded with two slots, one slot, and without any slot is compared. As observed, each slot contributes to an approximate 10-degree phase shift. This effect is further reflected in Fig. 9(b), where the computed attenuation constants in different scenarios are compared. The attenuation constant was derived using the phase obtained from the simulation (Fig. 9(b)) and applying Equation (7). However, for the purely theoretical case (represented by the gray line), the approximation $\phi_{21} = -\beta_g L$ was used with the parameters: $a$ = 60 mm, $L$ = 71.83 mm and $d$ = 19.42 mm.

Figure 10 presents the electric field isolines to illustrate the field's dependence on the z-direction. It is observed that a few centimeters away from the device's surface (approximately 4 cm), the isolines become flat, indicating that the field distribution becomes independent of this dimension. This observation suggests an exponential decay of the field with distance in the y-direction beyond this point [1].

*Measurement results:*

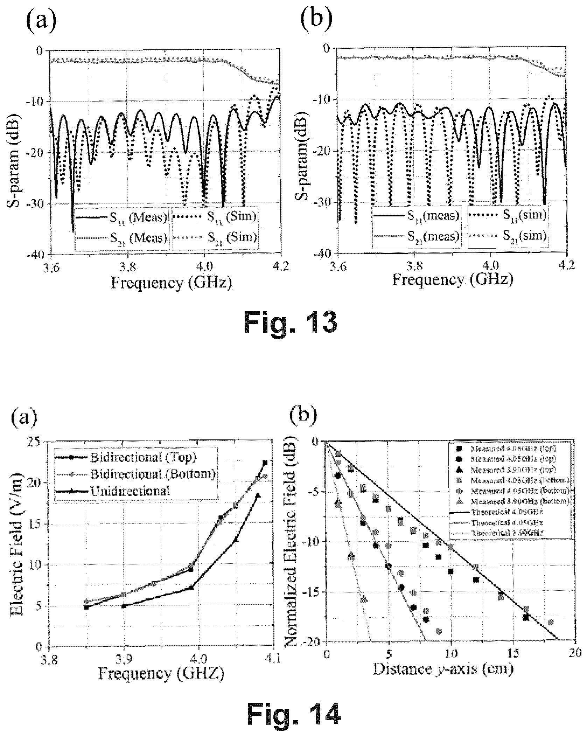

Here measurements of a prototype fabricated in 6063 aluminum alloy are presented. A a comparison between theoretical analysis, experimental measurements, and simulation results are shown. The prototype, consisting of 30-unit cells, is depicted in Fig. 11. Additionally, the matching network is illustrated in Fig. 12. To obtain the unidirectional version of the prototype, the bottom surface of the device was covered with adhesive aluminum tape. The measurement setup employed consisted of a Network Analyzer PNA N5221A and a Narda PMM EP-600 electric field probe. The structure was powered with 0.1 W, supplied by the Network Analyzer. Figure 13 shows a comparison between the measured and the simulated S-parameters. A reasonably good match to the reference impedance (50 Ω) is observed within the operating frequency band. The simulated and measured insertion losses for the bidirectional version are below 1.9 dB and 2.1 dB, respectively.

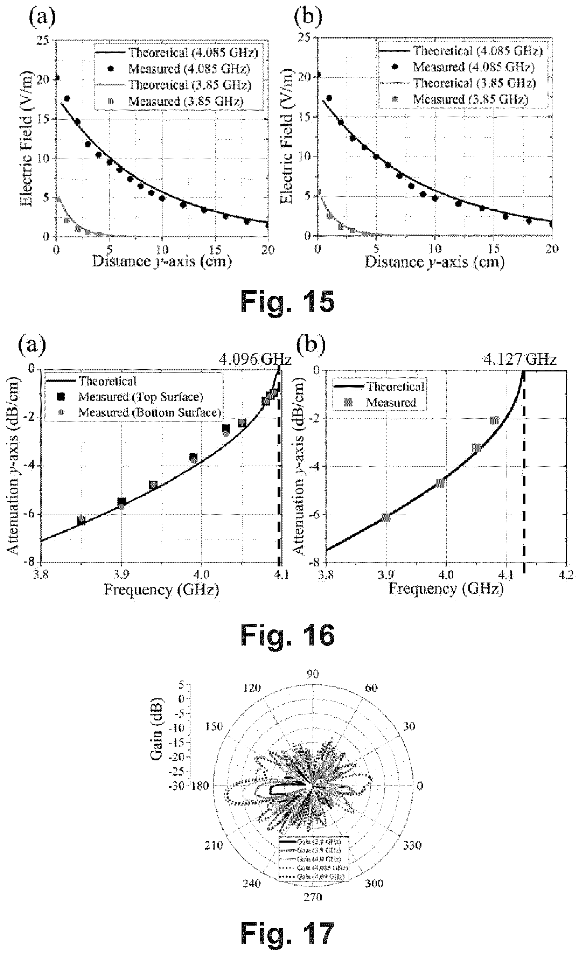

In the unidirectional version, both the simulated and measured insertion losses are below 2 dB. Given the transmission losses presented, there is significant potential to incorporate additional unit cells into the device, thereby expanding the illumination area. It can also be observed that there is an increase in insertion losses above 4 GHz. This occurs because the device enters the light cones at this frequency, leading to radiation (at 4.096 GHz and 4.127 GHz for bidirectional and unidirectional designs, respectively). In Figure 14(a), the electric field at a distance of 0.1 cm from the device's surface is depicted, serving as the basis to normalize the electric field decay shown in Figure 14(b). It is observed that the decay closely follows an exponential function. However, as illustrated in Figure 10, the variation in field isolines near the surface explains the minor deviations from the theoretical exponential trend observed in the measurements. Figure 15 presents the electric field in the broadside (y-axis) at frequencies of 4.08 GHz and 3.85 GHz, where a strong correlation between measured samples and theoretical analysis is evident. Despite nearing the light cone limit at 4.08 GHz, the theoretical predictions remain accurate. Figure 16 features a comparison of measured attenuation constants against theoretical analysis across various frequencies for both bidirectional and unidirectional configurations. These results were obtained by measuring the electric field level using an electric field probe, from the device's surface to a signal strength of 0.2 V/m. This was followed by normalization and determination of the line's slope. The findings show a high degree of concordance with theoretical predictions. Figure 17 illustrates the radiation pattern at different frequencies, highlighting a pronounced radiation lobe (0.2 dB at 4.09 GHz) near the end-fire direction (x-axis) as the frequency approaches the light cone. This is indicative of the transition between surface wave and radiative modes. However, radiation levels are maintained below -7.5 dB in all other directions. Notably, at frequencies below 3.9 GHz, the gain stays below -10 dB in all directions, effectively maintaining the electromagnetic field confined to the device's surface.

The above described measured results verify effective signal confinement, with radiation gain levels not exceeding -10 dB for frequencies up to 3.9 GHz, while the S-parameters exhibit favorable behavior within the operational band, with measured levels below -10 dB.

A person skilled in the art could introduce changes and modifications in the embodiments described without departing from the scope of the invention as it is defined in the attached claims.

<u>References:</u>

[1] J. Bonache, G. Zamora, F. Paredes, S. Zuffanelli, P. Aguilà, and F. Martin, "Controlling the Electromagnetic Field Confinement with Metamaterials," Sci Rep, vol. 6, 2016, doi: 10.1038/srep37739.

[2] K. Wu, D. Deslandes, and Y. Cassivi, "The substrate integrated circuits - a new concept for high-frequency electronics and optoelectronics," in 6th International Conference on Telecommunications in Modern Satellite, Cable and Broadcasting Service, 2003. TELSIKS 2003., IEEE, 2003, p. P-III. doi: 10.1109/TELSKS.2003.1246173.

[3] Marc Volta, "Field confinement devices for RFID based on SIW technologies," Master Thesis Telecommunication Engineering, Universitat Autònoma de Barcelona, Bellaterra, 2019. Accessed: Feb. 10, 2024. [Online]. Available: https://ddd.uab.cat/pub/trerecpro/2019/259304/VOLTA GELI_Marc.pdf

[4] Á. Jaque Jiménez, G. Zamora, and J. Bonache, "Frequency-Scanning Leaky-Wave Slot Antenna Array Based on Serpentine Waveguide With Open Stopband Suppression," IEEE Antennas Wirel Propag Lett, vol. 23, no. 1, pp. 344-348, Jan. 2024, doi: 10.1109/LAWP.2023.3324063.

[5] A. A. Oliner, "Radiating periodic structures: analysis in terms of k versus β diagrams. Short course on microwave field and network techniques." Polytechnic Institute of Brooklyn, 1963.

[6] A. A. Oliner, "1963 Short Course on Microwave Field and Network Techniques" Tuesday, June 4, 1963.

[7] M. Hamedani, H. Oraizi, D. Zarifi and A. Amini, "Design of Ku-band Leaky-Wave Slot Array Antenna Based on Ridge Gap Waveguide," 2019 13th European Conference on Antennas and Propagation (EuCAP), Krakow, Poland, 2019, pp. 1-3.

[8] J. Xu, W. Hong, H. Tang, Z. Kuai and K. Wu, "Half-Mode Substrate Integrated Waveguide (HMSIW) Leaky-Wave Antenna for Millimeter-Wave Applications," in IEEE Antennas and Wireless Propagation Letters, vol. 7, pp. 85-88, 2008, doi: 10.1109/LAWP.2008.919353.

[9] S. K. Podilchak, A. P. Freundorfer and Y. M. M. Antar, "Planar Leaky-Wave Antenna Designs Offering Conical-Sector Beam Scanning and Broadside Radiation Using Surface-Wave Launchers," in IEEE Antennas and Wireless Propagation Letters, vol. 7, pp. 155-158, 2008, doi: 10.1109/LAWP.2008.919326.

[10] G. Zamora, S. Zuffanelli, F. Paredes, F. J. Herraiz-Martínez, F. Martín and J. Bonache, "Fundamental-Mode Leaky-Wave Antenna (LWA) Using Slotline and Split-Ring-Resonator (SRR)-Based Metamaterials," in IEEE Antennas and Wireless Propagation Letters, vol. 12, pp. 1424-1427, 2013, doi: 10.1109/LAWP.2013.2287525.

[11] W. Yin et al., "Frequency Scanning Single-Ridge Serpentine Dual-Slot-Waveguide Array Antenna," in IEEE Access, vol. 8, pp. 77245-77254, 2020, doi: 10.1109/ACCESS.2020.2989318.

[12] K. Sarabandi, A. Jam, M. Vahidpour and J. East, "A Novel Frequency Beam-Steering Antenna Array for Submillimeter-Wave Applications," in IEEE Transactions on Terahertz Science and Technology, vol. 8, no. 6, pp. 654-665, Nov. 2018, doi: 10.1109/TTHZ.2018.2866019.

**Claims**

1. A system for near-field wireless power transfer, comprising an emitter (1) for generating electromagnetic energy, from at least one input electrical power signal injected therein, and propagating said electromagnetic energy therethrough, to be wirelessly captured in the near field by a receiver (2), wherein the system is **characterized in that** said emitter (1) comprises an electromagnetic field confinement device configured to operate in the surface wave mode for generating and propagating said electromagnetic energy in the form of surface waves.

2. The system of claim 1, further comprising said receiver configured and arranged to wirelessly capture said electromagnetic energy in the near field and to convert the same into an output electrical power signal.

3. The system of claim 1 or 2, wherein said electromagnetic field confinement device comprises a waveguide.

4. The system of claim 3, wherein said waveguide is filled with a dielectric material.

5. The system of claim 4, wherein said waveguide is a substrate integrated waveguide defining a structure having a length running along a y direction and a width across a x direction.

6. The system of claim 5, wherein at least one slot (1s) is defined in a metallic layer of the substrate integrated waveguide, wherein said at least one slot (1s) is configured and arranged so that first and second degenerate modes appear in the substrate integrated waveguide, said first degenerate mode having a magnetic wall symmetry with respect to a symmetry plane of said structure, and said second degenerate mode having an electric wall symmetry with respect to said symmetry plane and providing a net contribution of the electric field in said x direction.

7. The system of claim 3 or 6, wherein said waveguide is made of a non-metamaterial and according to a non-periodic arrangement.

8. The system of any of claims 4 to 7, wherein the waveguide is configured to operate in the surface wave mode to generate said surface waves with a controlled decay factor in the broadside direction on both top and bottom surfaces of the waveguide, said decay factor having been controlled by:

   - providing the waveguide with a width that makes $|\beta| > |k_0|$, wherein $\beta$ is the wavenumber of a surface wave signal propagating through the waveguide, and $k_0$ refers to the wavenumber in vacuum for that signal;
   and/or
   - two non-resonant slots having been placed in specific bends of the waveguide on both the top and bottom surfaces of the waveguide.

9. The system of claim 3, wherein said waveguide is a hollow waveguide with a periodic serpentine-shaped arrangement including a number of meandered unit cells, each meandered unit cell having a length predetermined to provide a phase shift between the input and output of each unit cell and a slot defined in a top or bottom face, to allow the formation and propagation of surface waves.

10. The system of claim 2 or of any of claims 3 to 9 when depending on claim 2, wherein said receiver (2) comprises a device configured to interact with the emitter (1) to constitute a directional coupler.

11. The system of claim 10, wherein said device is an antenna or a resonator configured to interact with the field generated by the emitter (1) and to capture the electromagnetic energy contained therein, either by coupling with the electric field, with the magnetic field or with both.

12. The system of claim 10, wherein said device is an electromagnetic field confinement device.

13. The system of claim 12 when depending on claim 3, wherein said electromagnetic field confinement device of the receiver (2) also comprises a waveguide defined as the waveguide of the emitter (1), at least with respect to the type of waveguide and/or the inclusion of at least one slot (1s).

14. The system of claim 10 or of any claims 11 to 13 when depending on claim 10, comprising at least one further receiver (2) defined as said receiver (2), each of the respective constituted directional couplers configured to:

   - wirelessly capture only part of the electromagnetic energy in the near field coming from the emitter (1), so that no further input electrical signal injection is needed, or
   - wirelessly capture all the electromagnetic energy in the near field coming from the emitter (1), so that a further input electrical signal injection is needed for the further receiver (2) being able to capture corresponding further electromagnetic energy in the near field generated by the emitter (1) from said further input electrical signal injection.

15. The system of any of the previous claims, constituting a charging station for electrically charge moving vehicles incorporating said receiver (2) under their bodies electrically connected to a battery, the system comprising an elongated member including the electromagnetic field confinement device of the emitter (1) extending longitudinally there along, to wireless power transfer to said receiver (2) to charge said battery when the respective vehicle circulates longitudinally over the elongated member.

Fig. 1

Fig. 2

1s

1

2

**Fig. 3**

(a)

d

(b)

d

**Fig. 4**

**Fig. 5**

Fig. 6

Fig. 7

Fig. 8

**Fig. 9**

**Fig. 10**

**Fig. 11**

**Fig. 12**

(a)

(b)

Fig. 13

(a)

(b)

Fig. 14

Fig. 15

Fig. 16

Fig. 17

Europäisches
Patentamt

European
Patent Office

Office européen
des brevets

# EUROPEAN SEARCH REPORT

**Application Number**

EP 24 38 2349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG CHAOYUN ET AL: "Novel mmWave Wireless Power Transfer Systems Using Broadband Circularly Polarized Rectennas and Leaky Wave Transmitters", 2023 IEEE INTERNATIONAL SYMPOSIUM ON ANTENNAS AND PROPAGATION AND USNC-URSI RADIO SCIENCE MEETING (USNC-URSI), IEEE, 23 July 2023 (2023-07-23), pages 539-540, XP034419602, DOI: 10.1109/USNC-URSI52151.2023.10237927 [retrieved on 2023-09-07] | 1-3,10, 11 | INV. H02J50/00 H02J50/23 H02J50/40 H02J50/70 |
| Y | * abstract * * section II; figures 1 a, b and c, 2 and 3 * * section III; figures 2, 3 and 5 * * section III B; figure 4 * * figure 5 * | 4-9, 12-15 | |
| | ----- | | |
| Y | LI XIAOWEN ET AL: "Circularly Polarized High Gain Leaky-Wave Antenna for CubeSat Communication", IEEE TRANSACTIONS ON ANTENNAS AND PROPAGATION, IEEE, USA, vol. 70, no. 9, 20 April 2022 (2022-04-20) , pages 7612-7624, XP011923146, ISSN: 0018-926X, DOI: 10.1109/TAP.2022.3167773 [retrieved on 2022-04-21] * sections II, III A, IV B and V; figures 1, 4, 18, 19, 23, 24 and 28 * | 4-8, 12-14 | TECHNICAL FIELDS SEARCHED (IPC) H02J |
| | ----- | | |
| | -/-- | | |

The present search report has been drawn up for all claims

| Place of search | Date of completion of the search | Examiner |
|---|---|---|
| Munich | 9 September 2024 | Oiring, Vinicius |

page 1 of 2

| Europäisches Patentamt European Patent Office Office européen des brevets | **EUROPEAN SEARCH REPORT** | Application Number EP 24 38 2349 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JAQUE JIMÉNEZ ÁLVARO ET AL: "Frequency-Scanning Leaky-Wave Slot Antenna Array Based on Serpentine Waveguide With Open Stopband Suppression", IEEE ANTENNAS AND WIRELESS PROPAGATION LETTERS, vol. 23, no. 1, 1 January 2024 (2024-01-01), pages 344-348, XP093200989, US ISSN: 1536-1225, DOI: 10.1109/LAWP.2023.3324063 * sections II, III and IV; figures 1, 2 and 8 * | 9 | |
| Y | US 2018/178666 A1 (JAVAID BILAL [US] ET AL) 28 June 2018 (2018-06-28) * paragraph [0006]; figure 4 * | 15 | |
| | | | **TECHNICAL FIELDS SEARCHED (IPC)** |

The present search report has been drawn up for all claims

| Place of search | Date of completion of the search | Examiner |
|---|---|---|
| Munich | 9 September 2024 | Oiring, Vinicius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2349

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | Publication date |
|---|---|---|---|
| US 2018178666 A1 | 28-06-2018 | KR 20180073425 A | 02-07-2018 |
| | | US 2018178666 A1 | 28-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BONACHE** ; **G. ZAMORA** ; **F. PAREDES** ; **S. ZUFFANELLI** ; **P. AGUILÀ** ; **F. MARTIN**. Controlling the Electromagnetic Field Confinement with Metamaterials. *Sci Rep*, 2016, vol. 6
- The substrate integrated circuits - a new concept for high-frequency electronics and optoelectronics. **K. WU** ; **D. DESLANDES** ; **Y. CASSIVI**. 6th International Conference on Telecommunications in Modern Satellite, Cable and Broadcasting Service, 2003. TELSIKS 2003.. IEEE, 2003, III
- **MARC VOLTA**. Field confinement devices for RFID based on SIW technologies. *Master Thesis Telecommunication Engineering, Universitat Autònoma de Barcelona, Bellaterra, 2019*, 10 February 2024, https://ddd.uab.cat/pub/trerecpro/2019/259304/-VOLTA GELI_Marc.pdf
- **Á. JAQUE JIMÉNEZ** ; **G. ZAMORA** ; **J. BONACHE**. Frequency-Scanning Leaky-Wave Slot Antenna Array Based on Serpentine Waveguide With Open Stopband Suppression. *IEEE Antennas Wirel Propag Lett*, January 2024, vol. 23 (1), 344-348
- **A. A. OLINER**. Radiating periodic structures: analysis in terms of k versus β diagrams. Short course on microwave field and network techniques. *Polytechnic Institute of Brooklyn*, 1963
- **A. A. OLINER**. 1963 Short Course on Microwave Field and Network Techniques. *Tuesday*, 04 June 1963

- **M. HAMEDANI** ; **H. ORAIZI** ; **D. ZARIFI** ; **A. AMINI**. Design of Ku-band Leaky-Wave Slot Array Antenna Based on Ridge Gap Waveguide. *2019 13th European Conference on Antennas and Propagation (EuCAP), Krakow, Poland*, 2019, 1-3
- **J. XU** ; **W. HONG** ; **H. TANG** ; **Z. KUAI** ; **K. WU**. Half-Mode Substrate Integrated Waveguide (HMSIW) Leaky-Wave Antenna for Millimeter-Wave Applications. *IEEE Antennas and Wireless Propagation Letters*, 2008, vol. 7, 85-88
- **S. K. PODILCHAK** ; **A. P. FREUNDORFER** ; **Y. M. M. ANTAR**. Planar Leaky-Wave Antenna Designs Offering Conical-Sector Beam Scanning and Broadside Radiation Using Surface-Wave Launchers. *IEEE Antennas and Wireless Propagation Letters*, 2008, vol. 7, 155-158
- **G. ZAMORA** ; **S. ZUFFANELLI** ; **F. PAREDES** ; **F. J. HERRAIZ-MARTÍNEZ** ; **F. MARTÍN** ; **J. BONACHE**. Fundamental-Mode Leaky-Wave Antenna (LWA) Using Slotline and Split-Ring-Resonator (SRR)-Based Metamaterials. *IEEE Antennas and Wireless Propagation Letters*, 2013, vol. 12, 1424-1427
- **W. YIN et al.** Frequency Scanning Single-Ridge Serpentine Dual-Slot-Waveguide Array Antenna. *IEEE Access*, 2020, vol. 8, 77245-77254
- **K. SARABANDI** ; **A. JAM** ; **M. VAHIDPOUR** ; **J. EAST**. A Novel Frequency Beam-Steering Antenna Array for Submillimeter-Wave Applications. *IEEE Transactions on Terahertz Science and Technology*, November 2018, vol. 8 (6), 654-665